# EUROPÄISCHE PATENTSCHRIFT

(11) **EP 2 755 877 B1**
(45) Veröffentlichungstag und Bekanntmachung des Hinweises auf die Patenterteilung: **10.06.2020**
(21) Anmeldenummer: 12759682.3
(22) Anmeldetag: 12.09.2012
(51) Int. Cl.: B60W 50/00, B60W 40/10, B60W 40/076

(54) **FUSION VON CHASSISSENSORDATEN MIT FAHRDYNAMIKDATEN**
FUSION OF CHASSIS SENSOR DATA WITH VEHICLE DYNAMICS DATA
FUSION DE DONNÉES DE CAPTEURS DE CHÂSSIS ET DE DONNÉES DE DYNAMIQUE DE MARCHE

(30) Priorität: 12.09.2011 DE 102011082530
(43) Veröffentlichungstag der Anmeldung: 23.07.2014
(73) Patentinhaber: Continental Teves AG & Co. OHG, 60488 Frankfurt am Main (DE)
(72) Erfinder: GÜNTHNER, Stefan, 60489 Frankfurt (DE); RINK, Klaus, 63517 Rodenbach (DE); STÄHLIN, Ulrich, 65760 Eschborn (DE)
(74) Vertreter: Wagner, Philipp
(86) Internationale Anmeldenummer: PCT/EP2012/067860
(87) Internationale Veröffentlichungsnummer: WO 2013/037839

(56) Entgegenhaltungen:
- EP-A1- 1 826 037
- WO-A1-2011/098333
- DE-A1-102004 019 928
- US-A1- 2004 153 227
- US-A1- 2006 155 440
- US-A1- 2009 071 772

## Beschreibung

Die Erfindung betrifft ein Verfahren zum Verarbeiten von Sensordaten in einem Fahrzeug, eine Steuervorrichtung zur Durchführung des Verfahrens und ein Fahrzeug mit der Steuervorrichtung.

Aus der WO 2011/ 098 333 A1 ist bekannt, in einem Fahrzeug verschiedene Sensorgrößen heranzuziehen, um bereits vorhandene Sensorgrößen zu verbessern oder neue Sensorgrößen zu generieren und somit die erfassbare Information zu steigern.

Aus US 2009/0071772 A ist ein Sensormodul bekannt, bei dem Daten von Sensoren miteinander verknüpft werden, um Fehler zu erkennen und Redundanz zu gewährleisten.

Ein Verfahren, bei dem unterschiedliche Signale in Form von Raddrehzahlen und Beschleunigung zur Plausibilisierung verwendet werden, ist aus EP-A-1 826 037 bekannt.

Es ist Aufgabe die Nutzung mehrerer Sensorgrößen zur Informationssteigerung zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Verarbeiten von Sensordaten in einem Fahrzeug die Schritte:
- Erfassen von Fahrdynamikdaten und Chassissensordaten des Fahrzeuges,
- Filtern der Fahrdynamikdaten oder der Chassissensordaten basierend auf den Chassissensordaten beziehungsweise den Fahrdynamikdaten.

Der Erfindung liegt die Überlegung zugrunde, dass Chassissensoren Lagedaten des Fahrzeuges über der Fahrbahn erfassen. Dabei sollen nachstehend unter Lagedaten alle Daten fallen, die in irgendeiner Weise Positionsdaten, Geschwindigkeitsdaten und/oder Beschleunigungsdaten enthalten. Sie sollen daher insbesondere von Positionsdaten abgegrenzt werden, die lediglich Wegeinformationen enthalten und das Fahrzeug zu einem ganz bestimmten Zeitpunkt im Raum relativ oder absolut lokalisieren.

Die Überlegung zugrunde gelegt erkennt die Erfindung, dass diese Lagedaten aus den Chassissensoren zusammen mit den Fahrdynamiksensoren genutzt werden könnten, um den Informationsgehalt der Daten zu steigern, die vertikale Lagedaten des Fahrzeuges und damit die Lagedaten des Fahrzeuges über der Fahrbahn umfassen.

Dabei können entweder die Fahrdynamikdaten basierend auf den Chassissdaten gefiltert werden oder umgekehrt. Unter das Filtern soll dabei jede beliebige analoge oder digitale Signalverarbeitungsmaßnahme fallen, mit der sich die beiden Datenarten gegenüberstellen lassen, um deren Informationsgehalt zu steigern. So kann dabei eine reine Mittelwertbildung ohne weitere Berücksichtigungen anderer Faktoren wie Rauschen durchgeführt werden. Soll das Rauschen mit berücksichtigt werden, käme ein Zustandsbeobachter oder ein Kalman-Filter als Filter in Betracht. Soll auch noch die Form des Rauschens berücksichtigt werden, so könnte ggf. ein Partikelfilter herangezogen werden, der eine Grundmenge an verfügbaren Rauschszenarien besitzt und das bei der Elimination zu berücksichtigende Rauschszenario beispielsweise durch eine Monte-Carlo-Simulation auswählt.

In einer Weiterbildung des angegebenen Verfahrens werden zum Filtern der Fahrdynamikdaten oder der vertikalen Fahrdynamikdaten des Fahrzeuges vertikale Lagedaten des Fahrzeugs aus den Chassissensordaten gegenübergestellt. Wie bereits erwähnt können auf diese Weise Unterschiede zwischen den beiden Datenarten und somit Fehler in der messtechnischen Erfassung von Daten gefunden werden, die die vertikale Lage des Fahrzeuges über der Fahrbahn betreffen.

Vorzugsweise umfassen die vertikalen Fahrdynamikdaten Wank- und Nickwinkelgeschwindigkeiten sowie Vertikalbeschleunigungen des Fahrzeuges, so dass diese Daten mit einer höheren Zuverlässigkeit angegeben werden können.

In einer besonderen Weiterbildung umfassen die Chassisensordaten Höhenstandsdaten und Aufbaubeschleunigungsdaten.

Dieser Weiterbildung liegt die Überlegung zugrunde, dass Höhenstandssensoren in der Regel an verschiedenen Punkten am Chassis des Fahrzeugs verbaut sind, um die vertikale Lage dieser Punkte über dem Boden zu erfassen. Aus der Gesamtlage aller Punkte ergibt sich dann, ob das Chassis des Fahrzeugs parallel zum Boden liegt, oder nicht, um so beispielsweise bei einem Fahrzeug mit Xenonlicht einen Blendschutz für einen Gegenverkehr zum Fahrzeug zu realisieren. Die mit den Chassissensoren erfasste vertikale Lage des Fahrzeuges kann dann genutzt werden, um beispielsweise nach zweimaliger zeitlicher Ableitung die mit den Fahrdynamiksensoren erfasste Vertikaldynamik des Fahrzeuges zu plausibilisieren. Andererseits könnten mit der Vertikaldynamik wiederum Daten verbessert werden, die sich aus dem Höhenstandssensor ergeben, wie beispielsweise die Fahrzeugmasse und ihre Verteilung.

Demgegenüber sind Aufbaubeschleunigungssensoren in der Regel an verschiedenen Punkten des Chassis des Fahrzeugs installiert, um vertikale Bewegungen dieser Punkte relativ zu anderen Punkten am Chassis des Fahrzeugs zu erfassen, damit beispielsweise ein aktives Fahrwerk sofort reagieren kann, wenn das Fahrzeug aus seiner parallelen Lage zum Fahrbahnboden bewegt wird. Die vertikalen Bewegungen könnten direkt mit der Vertikaldynamik aus den Fahrdynamiksensoren verglichen werden. Ferner könnte die aus den Aufbaubeschleunigungssensoren heraus durchgeführte Erdschwerefeldkompensation verbessert werden.

In besonders günstiger Weise stehen dabei bei einer Kombination der Höhenstandssensoren und der Aufbaubeschleunigungssensoren mit den Intertialsensoren drei verschiedene Sensortypen zur Erfassung der Vertikaldynamik des Fahrzeuges zur Verfügung, die gegeneinander zur Steigerung der erfassbaren Information gegeneinander gefiltert werden könnten.

In einer besonderen Ausführung umfasst das angegebene Verfahren die Schritte:
- Erfassen einer Absolutposition des Fahrzeuges, beispielsweise mit einem GNSS-Signal, wie einem GPS-Signal, und
- Aktualisieren der erfassten Absolutposition basierend auf den Fahrdynamiksensoren.

Diese Weiterbildung ist besonders günstig, da sich mit den verbesserten Vertikaldynamikdaten nun auch vertikale Positionen des Fahrzeuges an Orten ohne ein GNSS-Signal, wie beispielsweise in einem Parkhaus oder einer Tiefgarage erfassen lassen.

Das angegebene Verfahren umfasst weiterhin, dass zum Filtern eine Fahrbahnneigung basierend auf den Chassissensordaten ermittelt wird, wobei die Fahrdynamikdaten basierend auf der Fahrbahnneigung gefiltert werden.

Dem liegt die Erkenntnis zugrunde, dass über die Chassissensordaten nicht nur die Lage des Fahrzeuges über der Fahrbahn sondern auch umgekehrt die Lage der Fahrbahn zum Fahrzeug erfasst werden kann. So ist es möglich festzustellen, wann die Fahrbahn sich beginnt, an einem Berg aufwärts oder abwärts zu neigen. Diese zusätzliche Information kann ebenfalls zur Plausibilisierung von Sensordaten herangezogen werden.

Insbesondere kann dies beim Filtern der Fahrdynamik berücksichtigt werden, wenn mit den Fahrdynamikdaten basierend auf der Fahrbahnneigung ein Stillstandsabgleich des Fahrzeuges durchgeführt wird. Steht das Fahrzeug an einem Hang, könnten die Fahrdynamikdaten fälschlicherweise eine Bewegung des Fahrzeuges ausgeben, was jedoch anhand der gemessenen Fahrbahnneigung plausibilisierbar ist.

Gemäß einem weiteren Aspekt der Erfindung ist eine Steuervorrichtung eingerichtet, ein angegebenes Verfahren durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Fahrzeug eine angegebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines Fahrzeuges mit einem Fusionssensor, und
Fig. 2 eine Prinzipdarstellung den Fusionssensor aus Fig. 1 zeigen.

In den Figuren werden gleiche technische Elemente mit gleichen Bezugszeichen versehen und nur einmal beschrieben.

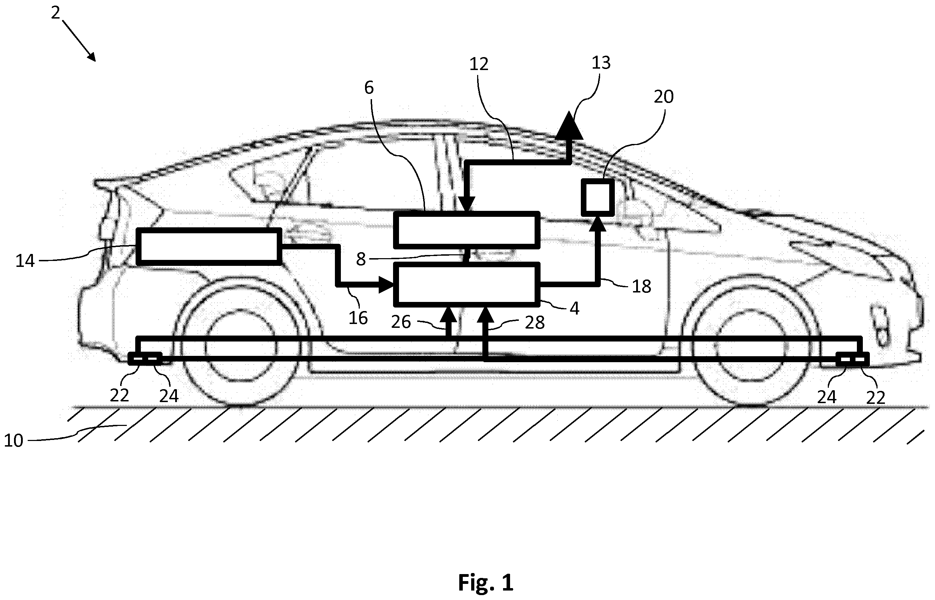

Es wird auf Fig. 1 Bezug genommen, die eine Prinzipdarstellung eines Fahrzeuges 2 mit einem Fusionssensor 4 zeigt.

Der Fusionssensor 4 empfängt in der vorliegenden Ausführungsform über einen GNSS-Empfänger 6 Positionsdaten 8 des Fahrzeuges 2, die eine absolute Position des Fahrzeuges 2 auf einer Fahrbahn 10 angeben. Diese Positionsdaten 8 werden in der vorliegenden Ausführung in einer dem Fachmann bekannten Weise aus einem GNSS-Signal 12 in dem GNSS-Empfänger 6 abgeleitet, das über eine GNSS-Antenne 13 empfangen wird. Für Details dazu wird auf die einschlägige Fachliteratur dazu verwiesen.

Der Fusionssensor 4 ist in einer noch zu beschreibenden Weise dazu ausgebildet, den Informationsgehalt der aus dem GNSS-Signal 12 abgeleiteten Positionsdaten 8 zu steigern. Dies ist einerseits notwendig, da das GNSS-Signal 12 einen sehr hohen Signal/Rauschbandabstand aufweisen und so sehr ungenau sein kann. Andererseits ist das GNSS-Signal 12 nicht ständig verfügbar.

In der vorliegenden Ausführung weist das Fahrzeug 2 dazu einen Inertialsensor 14 auf, der Fahrdynamikdaten 16 des Fahrzeuges 2 erfasst. Darunter fallen bekanntermaßen eine Längsbeschleunigung, eine Querbeschleunigung sowie eine Vertikalbeschleunigung und eine Wankrate, eine Nickrate sowie eine Gierrate des Fahrzeuges 2 beziehungsweise ein Subset aus diesen 6 Größen. Diese Fahrdynamikdaten 16 werden in der vorliegenden Ausführung herangezogen, um den Informationsgehalt der Positionsdaten 8 zu steigern und die Position des Fahrzeuges 2 auf der Fahrbahn 10 zu präzisieren. Die präzisierte Position 18 kann dann von einem Navigationsgerät 20 selbst dann verwendet werden, wenn das GNSS-Signal 12 beispielsweise unter einem Tunnel überhaupt nicht verfügbar ist.

Zur weiteren Steigerung des Informationsgehaltes der Positionsdaten 8 werden in der vorliegenden Ausführung noch Höhenstandssensoren 22 und Aufbaubeschleunigungssensoren 24 verwendet, die am Chassis des Fahrzeuges 2 befestigt sind und entsprechend Vertikalabstände 26 zur Fahrbahn 10 und Vertikalbeschleunigungen 28 zur Fahrbahn 10 erfassen.

Mit den durch die Höhenstandssensoren 22 erfassten Vertikalabstände 26 zur Fahrbahn 10 lassen sich beispielsweise ein mittlerer vertikaler Abstand des Fahrzeuges 2 von der Fahrbahn, eine Neigung und Steigung der Fahrbahn 10, eine Masse des Fahrzeuges 2 und ihre Verteilung sowie die Wank- und Nickrate des Fahrzeuges 2 bestimmen.

Mit den durch die Aufbaubeschleunigungssensoren 24 erfassten Vertikalbeschleunigungen 28 lassen sich eine Gesamtvertikalbeschleunigung des Fahrzeuges 2, eine Lage des Fahrzeuges 2 relativ zum Erdschwerefeld sowie die Wank- und Nickrate des Fahrzeuges 2 bestimmen.

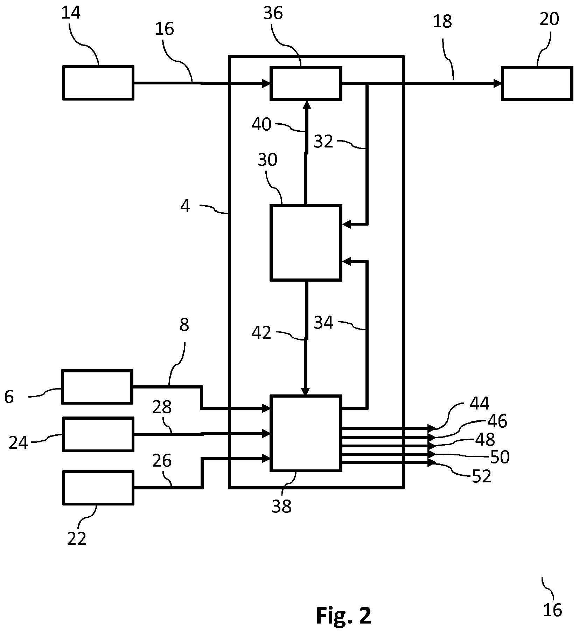

Es wird auf Fig. 2 Bezug genommen, die eine Prinzipdarstellung Fusionssensors 4 aus Fig. 1 zeigt.

In den Fusionssensor 4 gehen die in Fig. 1 bereits erwähnten Messdaten ein. Der Fusionssensor 4 soll die präzisierten Positionsdaten 18 ausgeben. Grundgedanke dazu ist es, die Information aus den Positionsdaten 18 des GNSS-Empfängers 6 den Fahrdynamikdaten 16 aus dem Inertialsensor 14 in ein Filter 30 gegenüberzustellen und so einen Signal/Rauschbandabstand in den Positionsdaten 18 des GNSS-Empfängers 6 oder den Fahrdynamikdaten 16 aus dem Inertialsensor 14 zu erhöhen. Dazu kann das Filter zwar beliebig ausgebildet, ein Kalman-Filter löst diese Aufgabe am wirkungsvollsten mit einem vergleichsweise geringen Rechenressourcenanspruch. Daher soll das Filter 30 nachstehend vorzugsweise ein Kalman-Filter 30 sein.

In das Kalman-Filter 30 gehen Lagedaten 32 des Fahrzeuges 2 und Vergleichslagedaten 34 des Fahrzeuges 2 ein. Die Lagedaten 32 werden in der vorliegenden Ausführung in einem beispielsweise aus der DE 10 2006 029 148 A1 bekannten Strapdown-Algorithmus 36 aus den Fahrdynamikdaten 16 generiert. Sie enthalten die präzisierten Positionsinformationen 18, aber auch andere Lagedaten über das Fahrzeug 2, wie beispielsweise seine Geschwindigkeit, seine Beschleunigung und sein Heading. Demgegenüber werden die Vergleichslagedaten 34 aus einem Modell 38 des Fahrzeuges 2 gewonnen, das zunächst einmal aus dem GNSS-Empfänger 6 mit den Positionsdaten 8 gespeist wird. Aus diesen Positionsdaten 8 werden dann in dem Modell 38 die Vergleichslagedaten 34 bestimmt, die die gleichen Informationen enthalten, wie die Lagedaten 32. Die Lagedaten 32 und die Vergleichslagedaten 34 unterscheiden sich lediglich in ihren Werten.

Das Kalman-Filter 30 berechnet basierend auf den Lagedaten 32 und den Vergleichslagedaten 34 einen Fehlerhaushalt 40 für die Lagedaten 32 und einen Fehlerhaushalt 42 für die Vergleichslagedaten. Unter einem Fehlerhaushalt soll nachstehend ein Gesamtfehler in einem Signal verstanden werden, der sich aus verschiedenen Einzelfehlern bei der Erfassung und Übertragung des Signals zusammensetzt. Bei dem GNSS-Signal 12 und damit bei den Positionsdaten 8 kann sich ein entsprechender Fehlerhaushalt aus Fehlern der Satellitenbahn, der Satellitenuhr, der restlichen Refraktionseffekte und aus Fehlern im GNSS-Empfänger 6 zusammensetzen. In den Fehlerhaushalt eines Signals können die Abweichung vom Erwartungswert des Signals und die Varianz des Signals eingehen.

Der Fehlerhaushalt 40 der Lagendaten 32 und der Fehlerhaushalt 42 der Vergleichslagedaten 34 werden dann entsprechend dem Strapdown-Algorithmus 36 und dem Modell 38 zur Korrektur der Lagedaten 32 beziehungsweise der Vergleichslagedaten 34 zugeführt. Das heißt, dass die Lagedaten 32 und die Vergleichslagedaten 34 iterativ um ihre Fehler bereinigt werden.

In der vorliegenden Ausführung werden zur Erzeugung der Vergleichslagedaten 34 neben den Positionsdaten 8 auch die Vertikalabstände 26 und die Vertikalbeschleunigungen 28 ein. Dies hat den Vorteil, dass vertikale Lagedaten und von den vertikalen Lagedaten abhängige Lagedaten in den Vergleichslagedaten, wie eine Vertikalbeschleunigung, eine Nickrate und eine Wankrate über die Vertikalabstände 26 und die Vertikalbeschleunigungen 28 präziser berechnet werden können.

Fällt das GNSS-Signal 12 beispielsweise in einem Parkhaus aus, so können über die Vertikalabstände 26 und die Vertikalbeschleunigungen 28 immer noch vertikale Lagedaten über das Fahrzeug 2 gesammelt werden, um die vertikale Lage des Fahrzeuges 2, also beispielsweise die spezielle Lage in einem Stockwerk des Parkhauses zu berechnen.

Umgekehrt könnten in dem Modell 38 auch durch die Höhenstandsensoren 22 und Aufbaubeschleunigungssensoren 24 ohnehin berechenbare Daten, wie beispielsweise eine Fahrbahnneigung 44, eine Fahrbahnsteigung 46, ein Fahrzeugmasse 48, eine Verteilung 50 der Fahrzeugmasse 48 und eine Lage 52 des Fahrzeuges 2 zum Erdschwerefeld durch die Berechnung des Fehlerhaushaltes 42 zuverlässiger berechnet werden.

## Patentansprüche

1. Verfahren zum Verarbeiten von Sensordaten (8, 16, 26, 28) in einem Fahrzeug (2), umfassend:
- Erfassen (14, 22, 24) von Fahrdynamikdaten (16) und Chassissensordaten (26, 28) des Fahrzeuges (2),
- Filtern (30) der Fahrdynamikdaten (16) oder der Chassissensordaten (26, 28) basierend auf den Chassissensordaten (26, 28) beziehungsweise den Fahrdynamikdaten (16),
- Berechnen einer Fahrbahnneigung (44) und/oder Fahrbahnsteigung (46) basierend auf den Chassissensordaten (26, 28) wobei zum Filtern die Fahrbahnneigung (44) und/oder Fahrbahnsteigung (46) basierend auf den Fahrdynamikdaten (16) gefiltert werden und
wobei die Chassissensordaten (26, 28) Höhenstandsdaten umfassen.

2. Verfahren nach Anspruch 1, wobei zum Filtern (30) der Fahrdynamikdaten (16) oder der Chassissensordaten (26, 28) vertikalen Fahrdynamikdaten des Fahrzeuges (2) aus den Fahrdynamikdaten (16) vertikale Lagedaten des Fahrzeugs aus den Chassissensordaten (26, 28) gegenübergestellt werden.

3. Verfahren nach Anspruch 2, wobei die vertikalen Fahrdynamikdaten Wank- und Nickwinkelgeschwindigkeiten sowie Vertikalbeschleunigungen des Fahrzeuges (2) umfassen.

4. Verfahren nach einem der vorstehenden Ansprüche, wobei die Chassisensordaten (26, 28) Aufbaubeschleunigungsdaten (28) umfassen.

5. Verfahren nach einem der vorstehenden Ansprüche, umfassend Abgleichen eines Stillstands des Fahrzeuges basierend auf der gefilterten Fahrbahnneigung (44) und/oder Fahrbahnsteigung (46).

6. Steuervorrichtung (4) mit Mitteln zur Durchführung des Verfahrens nach einem der vorstehenden Ansprüche.

7. Steuervorrichtung (4) nach Anspruch 6, umfassend einen Prozessor und einen Speicher in dem ein Verfahren nach einem der Ansprüche 1 bis 6 in Form eines Computerprogramms hinterlegt ist, wobei der Prozessor zur Ausführung des Verfahrens vorgesehen, wenn das Computerprogramm aus dem Speicher in den Prozessor geladen ist.

8. Computerprogrammprodukt umfassend einen Programmcode, der auf einem computerlesbaren Datenträger gespeichert ist und der, wenn er auf einer Datenverarbeitungseinrichtung ausgeführt wird, ein Verfahren nach einem der Ansprüche 1 bis 6 durchführt

9. Fahrzeug (2) umfassend eine Steuervorrichtung (4) nach Anspruch 6 oder 7.

## Claims

1. Method for processing sensor data (8, 16, 26, 28) in a vehicle (2), comprising:
- capturing (14, 22, 24) driving dynamics data (16) and chassis sensor data (26, 28) of the vehicle (2),
- filtering (30) the driving dynamics data (16) or the chassis sensor data (26, 28) on the basis of the chassis sensor data (26, 28) or the driving dynamics data (16),
- calculating a road inclination (44) and/or road gradient (46) on the basis of the chassis sensor data (26, 28), wherein filtering involves the road inclination (44) and/or road gradient (46) being filtered on the basis of the driving dynamics data (16), and
wherein the chassis sensor data (26, 28) comprise ride height data.

2. Method according to Claim 1, wherein filtering (30) of the driving dynamics data (16) or of the chassis sensor data (26, 28) involves vertical position data of the vehicle from the chassis sensor data (26, 28) being compared with vertical driving dynamics data of the vehicle (2) from the driving dynamics data (16).

3. Method according to Claim 2, wherein the vertical driving dynamics data comprise roll and pitch angular velocities and vertical accelerations of the vehicle (2).

4. Method according to one of the preceding claims, wherein the chassis sensor data (26, 28) comprise body acceleration data (28).

5. Method according to one of the preceding claims, comprising calibrating a standstill of the vehicle on the basis of the filtered road inclination (44) and/or road gradient (46) .

6. Control apparatus (4) having means for performing the method according to one of the preceding claims.

7. Control apparatus (4) according to Claim 6, comprising a processor and a memory in which a method according to one of Claims 1 to 6 is stored in the form of a computer program, wherein the processor is intended to carry out the method when the computer program is loaded into the processor from the memory.

8. Computer program product comprising a program code that is stored on a computer-readable data carrier and that, when executed on a data processing device, performs a method according to one of Claims 1 to 6.

9. Vehicle (2) comprising a control apparatus (4) according to Claim 6 or 7.

## Revendications

1. Procédé de traitement de données de capteur (8, 16, 26, 28) dans un véhicule (2), comprenant :
- acquisition (14, 22, 24) de données de dynamique de conduite (16) et de données de capteur de châssis (26, 28) du véhicule (2),
- filtrage (30) des données de dynamique de conduite (16) ou des données de capteur de châssis (26, 28) en se basant sur les données de capteur de châssis (26, 28) ou les données de dynamique de conduite (16),
- calcul d'une inclinaison de la chaussée (44) et/ou d'une pente de la chaussée (46) en se basant sur les données de capteur de châssis (26, 28), l'inclinaison de la chaussée (44) et/ou la pente de la chaussée (46) étant, pour le filtrage, filtrées en se basant sur les données de dynamique de conduite (16) et
les données de capteur de châssis (26, 28) comprenant des données de position de hauteur.

2. Procédé selon la revendication 1, selon lequel, en vue du filtrage (30) des données de dynamique de conduite (16) ou des données de capteur de châssis (26, 28), des données de dynamique de conduite verticales du véhicule (2) issues des données de dynamique de conduite (16) sont confrontées à des données de position verticale du véhicule issues des données de capteur de châssis (26, 28).

3. Procédé selon la revendication 2, les données de dynamique de conduite verticales comprenant des vitesses angulaires de roulis et de tangage ainsi que des accélérations verticales du véhicule (2).

4. Procédé selon l'une des revendications précédentes, les données de capteur de châssis (26, 28) comprenant des données d'accélération de carrosserie (28).

5. Procédé selon l'une des revendications précédentes, comprenant la compensation d'une immobilisation du véhicule en se basant sur l'inclinaison de la chaussée (44) et/ou la pente de la chaussée (46) filtrée.

6. Arrangement de commande (4) comprenant des moyens pour mettre en œuvre le procédé selon l'une des revendications précédentes.

7. Arrangement de commande (4) selon la revendication 6, comprenant un processeur et une mémoire dans laquelle est stocké un procédé selon l'une des revendications 1 à 6 sous la forme d'un programme informatique, le processeur étant conçu pour mettre en œuvre le procédé lorsque le programme informatique est chargé dans le processeur depuis la mémoire.

8. Produit de programme informatique, comprenant un code de programme qui est enregistré sur un support de données lisible par ordinateur et qui, lorsqu'il est exécuté sur un dispositif de traitement de données, met en œuvre un procédé selon l'une des revendications 1 à 6.

9. Véhicule (2) comprenant un arrangement de commande (4) selon la revendication 6 ou 7.
